# EUROPEAN PATENT SPECIFICATION

(11) **EP 1 610 945 B1**
(45) Date of publication and mention of the grant of the patent: **24.02.2010**
(21) Application number: 04724019.7
(22) Date of filing: 29.03.2004
(51) Int. Cl.: B32B 15/08, B32B 27/36

(54) **SHEET MATERIAL FOR FORMING APPLICATIONS, METAL CONTAINER MADE FROM SUCH A SHEET MATERIAL AND PROCESS FOR PRODUCING SAID SHEET MATERIAL**
BAHNMATERIAL ZUR VERFORMUNG, DARAUS HERGESTELLTER METALLBEHÄLTER UND VERFAHREN ZUR HERSTELLUNG
MATERIAU EN FEUILLE POUR APPLICATIONS DE FORMAGE, CONTENANT METALLIQUE PRODUIT A PARTIR D'UN TEL MATERIAU EN FEUILLE ET PROCEDE PERMETTANT DE PRODUIRE CE MATERIAU EN FEUILLE.

(30) Priority: 28.03.2003 EP 03075943
(43) Date of publication of application: 04.01.2006
(73) Proprietor: Corus Staal BV, 1970 CA Ijmuiden (NL)
(72) Inventor: SPAANS, Coenraad, Jan, NL-8861 AJ Harlingen (NL); DEN HARTOG, Adrianus, Johannes, NL-2315 EB Leiden (NL)
(74) Representative: Herman de Groot, Johan Willem
(86) International application number: PCT/EP2004/003617
(87) International publication number: WO 2004/085144

(56) References cited:
- US-A- 4 734 335
- US-A- 5 780 158
- US-B1- 6 261 654
- PATENT ABSTRACTS OF JAPAN vol. 1995, no. 05, 30 June 1995 (1995-06-30) & JP 7 047649 A (TOYOBO CO LTD), 21 February 1995 (1995-02-21)

## Description

The invention relates to sheet material to be made into an object by an industrial forming process, the material comprising a metal substrate and a polymer coating system bonded thereto. The invention further relates to a metal container made from such a sheet material and to a process for producing said sheet material.

As a typical industrial forming process is considered for example a deep-drawing process, a draw-and-redraw process or a draw-and-wall ironing process.

Polymer-coated drawn and wall-ironed (DWI) beer and beverage cans are gaining more and more interest. The advantage of such cans is that the can maker does not have to apply an in-can lacquer. This not only avoids the use of volatile components but also simplifies the production chain and makes the process economically viable at smaller outputs.

Mineral water can be considered to be amongst the most critical filling goods for a steel beverage can. Besides flavour retention, corrosion resistance of DWI polymer coated beverage cans in combination with mineral water has proven to be critical. From the plastic bottle industry, it is known that polyethylene terephthalate (PET) can be used for mineral water packing. These bottles generally consist of highly oriented and crystallized PET; special grades of PET are available in order to ensure sufficient flavour retention.

On translating this technology to steel beverage cans, several performance problems should be solved.

Firstly, standard PET grades do not show sufficient adhesion to steel after wall ironing of the PET coated steel cup, especially after forming, heat treatment and/or decoration. This issue can be resolved by using a thin layer of specially modified PET grades (e.g. iso-phthalic acid (IPA) or cyclohexane dimethanol (CHDM) modifications), optionally in combination (blend or co-polymerisation) with standard PET.

Secondly, filled beverage cans made from thin metal always show a limited amount of so-called dome growth caused by the pressure-volume behaviour under influence of temperature variations. In the case of PET coated beverage cans, this results in cracking of the coating and subsequent corrosion in the bottom channel on prolonged exposure to the beverage. This, in turn, results in unacceptably high levels of iron pick-up in the filling good.

Thirdly, after filling, the polymer-coated can is closed, whereby the lid is normally attached to the neck of a flanged can by a seaming operation. The polymer coated, drawn and wall ironed necked can, is plastically deformed during seaming with the contents already in the can. This leads to coating stresses that may lead to brittle failure of the coating.

Another problem relates to the dent resistance of the can. US-patents 5,653,357 and 6,136,395 describe that standard PET or polyethylene iso-phthalic acid (PET/I) modified PET coatings are prone to cracking and permeation on impact and/or denting.

The aforementioned problems obviously imply compromised shelf life of the can. All have in common that the PET coated beverage cans are prone to cracking of the coating and subsequent corrosion in the bottom channel at the location where the lid is seamed to the body (body hook radius) and/or dented locations.

JP 7 047649 A has disclosed a polyester composite film for lamination onto metals. This known film comprises a layered A/B/A structure having identical inner and outer layers, wherein the layer A is composed of polyethylene terephthalate isophthalate and the layer B is composed of a specific polyester containing a terephtalic acid residue, a 10C aliphatic dicarboxylic acid residue, ethylene glycol and 1,4 butane diol.

From US 5,780,158 a biaxially oriented film to be laminated on a metal is known, which film comprises a first layer of a polyester comprising ethylene terephthalate as a main recurring unit and a second layer formed from a composition of a polycarbonate and polyesters. The polyesters consists essentially of a first polyester comprising ethylene terephthalate as a main recurring unit and of a second polyester comprising butylene terephthalate as a main recurring unit.

US-B1-6,261,654 has disclosed a composite resin film and metallic sheet coated with the same, wherein the film has three layers, an upper layer entirely composed of polyester resin, an intermediate layer composed of a blend of polyester resin and polycarbonate resin and a lower layer also composed of a blend of polyester resin and polycarbonate resin.

It is an object of this invention to provide a sheet material to be made into an object by an industrial forming process, the material comprising a metal substrate and a polymer coating system bonded thereto that enables to increase the shelf life of a can containing a beverage such as mineral water or a caffeine containing soft drink.

It is another object of this invention to provide a sheet material for forming applications comprising a metal substrate and a polymer coating system bonded thereto that provides good can-making performance.

It is still another object of this invention to provide a sheet material for forming applications comprising a metal substrate and a polymer coating system bonded thereto that provides good corrosion resistance, good stress-crack resistance and adhesion to the substrate.

According to the invention, one or more of these objectives are reached with a sheet material to be made into an object by an industrial forming process, the material comprising a metal substrate and a polymer coating system bonded thereto, the coating system comprising
- an inner layer comprising a blend and/or copolymer of PET and CHDM and/or IPA modified PET as a layer for bonding the system to the substrate;
- a layer consisting of a blend and/or a copolymer of PET and PBT as a barrier layer;
- an outer layer consisting of PET;
wherein the outer layer has non tacking properties so as to avoid sticking of the material to the forming tools at normal operation temperatures in the industrial forming process.

By using an inner layer comprising a blend and/or copolymer of PET and CHDM and/or IPA modified PET an excellent adhesion to a metal substrate both prior to and after a forming operation, such as can-making, decoration, necking and heat treatment such as sterilisation or pasteurisation was obtained. The modified PET was produced using for example IPA or CHDM or combination thereof. A mixture of PET and modified PET may be obtained by blending and/or copolymerisation.

By using a barrier layer consisting of a blend and/or a copolymer of PET and PBT (porybutylene-terephthalate) an excellent resistance to stress cracking was obtained. The barrier layer also prevents contact between the contents of the can and the metal substrate. A mixture of PET and PBT may be obtained by blending and/or copolymerisation.

By using an outer layer, consisting of sufficient non-stick properties at normal operation temperatures in forming processes are obtained in order to allow can-making at high speeds and in large runs without the coating sticking to the forming tools. During start-up or very slow running of the can-making process, operating temperatures are so that tacking does not occur. After some time or during running at higher speeds however, the operating temperature of the tools increases. The presence of PBT in the barrier layer causes the barrier layer to become sticky. By applying an outer layer having non-tacking properties on top of the barrier layer, the problem of tacking is solved, whilst retaining the favourable properties as to stress-cracking resistance of the barrier layer.

Tacking during a forming process is to be understood as the local sticking of the object which is being formed, to the forming tools.

In an embodiment of the invention the outer layer has a sufficiently high melting point and glass transition temperature in order to avoid tacking. For typical forming processes such as drawing, temperatures such as below 100 °C are not uncommon. This temperature of above ambient temperature but below a relatively low temperature of e.g. 900 °C, is known to be a normal operating temperature during forming processes such as draw-and-wall ironing operations in can-making. If tacking of the sheet material is avoided, then the stripping properties remain excellent, e.g. a cup formed from the material will not stick to the forming tools such as the punch, and continuous production will not be disrupted by problems regarding stripping the cup from the punch.

In an embodiment of the invention, the barrier layer of the coating system consists of a mixture of PET and PBT and in that the PBT-content of the mixture is preferably at least about 10%, more preferably at least about 15% and more preferably at least about 20%. The addition of at least 10% of PBT to the PET causes a decrease in stress-cracking resulting from dome-growth after filling and storing of the cans. A further increase in PBT to at least 15% or even at least 20% caused the stress-cracking to vanish, resulting in pore-free in pore-free cans showing low uptake of substrate ions, such as iron in case of a steel substrate, after prolonged storage of over 3 months at a temperature of approximately 35 °C.

In an embodiment of the invention the barrier layer consists of a mixture of PET and PBT and in that the PBT-content of the mixture is at most about 60%. It has been found that at levels of above 60% PBT in the barrier layer the increase in costs of the barrier layer no longer outweighs the increase in stripping or non-tacking properties.

In an embodiment of the invention, the barrier layer consists of a mixture of approximately 50% PET and approximately 50% PBT. This ratio of approximately 50%:50% of PET:PBT provides excellent stress-cracking resistance and also provides pore-free and corrosion free cans.

In an embodiment of the invention, the outer layer consists of PET with a glass transition temperature of at least 70 °C so as to avoid tacking. It was found that this value provided good non-tacking properties. The non-sticking properties improve with a higher glass transition temperature thereby increasingly avoiding tacking at low temperature.

In a further embodiment of the invention, the outer layer consists of PET with a melting temperature of at least 240 °C so as to avoid tacking. The application of an outer layer consisting of PET with this melting temperatures or higher enables a good can-making performance without sticking of the coating to the draw and wall ironing tools. Especially during wall-ironing the operation temperatures can reach these very high temperatures.

In an embodiment of the invention, the thickness of the barrier layer is at least 10 µm, preferably at least 15 µm. This minimum thickness provides adequate stress-cracking resistance. The stress cracking resistance increases with increasing thickness of the barrier layer. However, an increase in thickness of the barrier layer also results in an increase in costs of the barrier layer. It was found that a suitable maximum for the thickness of the barrier coating is about 50 µm.

In a further embodiment the total thickness of the coating is smaller than 40 µm, preferably between 20 and 35 µm, more preferably about 30 µm. For economical reasons, there is a sustained effort to reduce the coating thickness. It was found that to avoid porosity, achieve good adhesion and good non-sticking properties, a coating comprising an inner layer of about 6 µm, a barrier layer of about 18 µm and an outer layer of about 6 µm, i.e. a total coating thickness of about 30 µm provides an excellent combination of the required properties.

The coating system enables (thermal) decoration and necking of the can coated with the decorated coating system.

According to a second aspect, the invention is also embodied in a metal container made from a sheet material as described hereinabove.

In an embodiment of the invention, the substrate substantially comprises steel or a steel alloy or aluminium or an aluminium alloy. The substrate may optionally be coated. In a further embodiment the substrate is electro-chromium coated steel (ECCS) or tinplate. This combination of substrate and coating system enables to use a relatively cheap substrate and give it excellent properties by means of the coating system. ECCS is also known as tin-free steel.

In a preferred embodiment of the invention, the metal container is a beverage can, for instance for containing mineral water or soft drinks such as caffeine containing soft drinks. These beverages may be carbonated. The coating system enables excellent flavour retention by the barrier layer which prevents the contents of the can from contacting the substrate and prevents pick-up of elements from the substrate. For example when applying the coating system to an iron-based substrate, the pick up of iron is effectively prevented. It should be noted that the sheet material according to the invention is also well suited for the manufacturing of draw-and-redraw cans (DRD) or DWI-cans for food.

The invention is also embodied in a process for producing a sheet material as described hereinabove wherein the coating system is produced in situ by extrusion of a layer or co-extrusion of at least two layers using a suitable feed-block/die set-up. With in-situ it is meant that the coating system is produced immediately prior to application to the metal substrate. It is also possible to apply the coating layers in subsequent extrusion steps.

The invention is further embodied in a process for producing a sheet material as described hereinabove wherein that the coating system is formed by first preparing a film comprising one or more layers of the coating system, optionally stretching the film, and applying it to the substrate. The film may also be prepared off site or purchased elsewhere. It is partly dependent on the nature of the coating line where the sheet material is produced which option, i.e. production in situ by extrusion or co-extrusion or by a roll-coating process, is the most adequate option. It is also possible to apply the coating layers in subsequent roll-coating steps. It will be clear that a combination of roll-coating and (co-)extrusion steps is also possible.

The invention is also embodied in a process for producing a sheet material as described hereinabove wherein the film comprising the barrier and outer layer, which is optionally stretched the film before applying it to the substrate, is applied to the substrate which is already provided with the inner layer. In this embodiment the inner layer, which provides the adhesion to the substrate of the coating system, is applied before applying the other two layers. This allows for controlling the application condition to be tailored to the needs of the inner layer, providing an excellent adhesion of the inner layer to the substrate.

It should be noted that the outer layer can also be provided by applying a lacquer. As an alternative to applying the coating in a co-extrusion process or by subsequently extruding the layers onto the substrate, the inner layer and barrier can be applied in an extrusion process or roll-coating process followed by a lacquering step to apply the outer layer. The lacquer outer layer has non-tacking properties so as to avoid sticking of the material to the forming tools at normal operation temperatures in forming processes.

The present invention will now be further explained by the following non-limitative examples.

### Example 1 (mineral water)

The following coating system (all percentages are weight percentages) was coextruded:
- Inner adhesion layer (6 µm): 70% PETG (containing 37% CHDM co-monomer) blended with 30% standard PET (water bottle grade).
- Barrier layer (18 microns): 50% standard PET blended with 50% PBT.
- Outer layer (6 microns): 100% standard PET.

The co-extrudate was coated onto ECCS steel (0.19 mm, T57 BA), the total coating thickness being 30 microns. The reverse side of the strip was coated with a standard 20 micron two-layer PET specification consisting of a modified PET adhesion and standard bottle grade PET top layer. After coating, the material was heat treated at above the highest melting temperature of the polymer coating at 270 °C and rapidly quenched.

The resulting polymer coated strip was fed to a DWI line and beverage cans (33 cl) were produced (the 3-layer coating of the invention being on the inside of the can). Production ran smoothly and no can making issues were observed. A total of about 300 cans were made, the average E470 porosity value being 0.70 mA. E470 porosity measurements were performed both on necked and un-necked cans; approximately 10% of the total amounts of cans were assessed.

The resulting cans were subsequently filled with carbonated mineral water, closed and pack tested at 35 °C for 3 months. For a number of cans, purposely dome growth was initiated by submerging the cans in warm water (55°C), which resulted in growth of the dome. This is known to result in crazing in the bottom channel and thus in increased iron uptake. In order to emphasize the effects, dome growth was purposely exaggerated (significantly more than the common practice of <2 mm); in some cases leading to complete dome reversal. After opening and emptying the cans, they were inspected with respect to corrosion. Additionally, the iron pick-up was determined. No corrosion in the bottom channel was observed, both for can with and without dome growth. Furthermore, the iron pick-up turned out to be significantly lower compared to the standard PET reference (example 3) in the case of dome growth. The norm for iron pick-up (being 0.1-0.2 mg/l, depending on the mineral water brand) could not be achieved. This however is caused by the severe testing conditions. It should be understood that the sheet materials and the cans are produced on pilot lines. This inherently results in a somewhat more porous coating as compared to an industrial production and forming process. The improvement of the described coating specification (example 1) compared to the reference (example 3) is very significant. The results with respect to can making, corrosion and iron pick-up are presented in table 1.

**Table 1: Example 1- mineral water.**

| Can | Bottom rowth growth | Length corrosion bottom channel (mm) min/average/max | Fe content (mg/l) | Can making performance |
|---|---|---|---|---|
| | | | min/average/max | |
| 1-7 | Yes | 0/0/0 | 0.37/0.81/1.74 | |
| 8-10 | No | 0/0/0 | 0.12/0.13/0.15 | Excellent |

### Example 2 (mineral water)

Identical to example 1 but in this case a 2-layer system was made with the following specification:
- Adhesion layer (6 microns): 70% PETG blended with 30% standard PET.
- Barrier layer (24 microns): 50% PBT blended with 50% PET.

On running (already after about 25 cans), can making resulted in sticking on the punch of the cans after wall ironing, greatly compromising the line continuity. In a discontinuous set-up, about 250 cans were produced, the average E470 porosity value being 0.70 mA.

After pack testing the cans with mineral water as described in example 1, corrosion in the bottom channel was determined. Corrosion was measured by determining the arc-length of the corroded area in the bottom channel. In the case where the complete bottom channel was covered with corrosion products, the reported length would be 157 mm, being equivalent to the circumference.

The results with respect to can making, corrosion and iron pick-up are presented in table 2.

**Table 2: Example 2 - mineral water.**

| Can | Bottom growth | Length corrosion bottom channel (mm) min/average/max | Fe content (mg/l) | Can making performance |
|---|---|---|---|---|
| | | | min/average/max | |
| 1-3 | Yes | 5/55/100 | 0.52 | |
| 4-10 | No | 0/0/0 | 0.04/0.04/0.04 | Very poor |

### Example 3 (mineral water, standard PET reference)

Identical to example 1 but in this case a 2-layer system was made with the following specification:
- Inner layer (6 microns): 70% PETG blended with 30% standard PET.
- Barrier layer (24 microns): 100% PET.

Can making ran excellent, also on prolonged running. A total of 1000 cans were made, the average E470 porosity value being 0.70 mA. After pack testing with mineral water, however, severe corrosion in the bottom channel was observed (measured as described in example 2) as well as unacceptably high levels of iron pick-up. The results with respect to can making, corrosion and iron pick-up are presented in table 3.

**Table 3: Example 3 - Mineral water, standard PET reference.**

| Can | Bottom growth | Length corrosion bottom channel (mm) min/average/max | Fe content (mg/l) | Can making performance |
|---|---|---|---|---|
| | | | min/average/max | |
| 1-8 | Yes | 157/157/157 | 14.1/30.9/35 | |
| 9-28 | No | 0/0/0 | 0.03/0.07/0.08 | Excellent |

### Example 4 (caffeine containing soft drink)

Coating specification and cans were made identical to example 1.

The resulting cans were filled with caffeine containing soft drink, closed and pack tested at 35 °C for 3 months. For a number of cans, purposely dome growth was initiated. In order to emphasize the effects, dome growth was purposely exaggerated (significantly more than the common practice of <2 mm); in some cases leading to complete dome reversal. After opening and emptying the cans, they were inspected with respect to corrosion. Additionally, the iron pick-up was determined. Some corrosion in the bottom channel was observed, both for can with and without dome growth. The iron pick-up turned out to be significantly lower compared to the standard PET reference (example 5) in the case of dome growth. The improvement of the described coating specification (example 4) compared to the reference (example 5) is very significant. The results with respect to can making, corrosion and iron pick-up are presented in table 4.

**Table 4: Example 4 - caffeine containing soft drink.**

| Can | Bottom growth | Length corrosion bottom channel (mm) min/average/max | Fe content (mg/l) | Can making performance |
|---|---|---|---|---|
| | | | min/average/max | |
| 1-7 | Yes | 0/3.7/10 | 2.47/4.42/7.50 | |
| 8-10 | No | 0/0/0 | 0.19/0.36/0.47 | Excellent |

### Example 5 (caffeine containing soft drink, standard PET reference).

Coating specification and cans were made identical to example 3. The cans were filled with caffeine containing soft drink, closed and pack tested at 35 °C for 1 month.

Can making ran excellent, also on prolonged running. A total of 1000 cans were made, the average E470 porosity value being 0.70 mA. After pack testing with mineral water, however, severe corrosion in the bottom channel was observed (measured as described in example 2) as well as unacceptably high levels of iron pick-up. The results with respect to can making, corrosion and iron pick-up are presented in table 5.

**Table 5: Example 5 - caffeine containing soft drink, standard PET reference).**

| Can | Bottom growth | Length corrosion bottom channel (mm) min/average/max | Fe content (mg/l) | Can making performance |
|---|---|---|---|---|
| | | | min/average/max | |
| 1-8 | Yes | 157/157/157 | 33.8/44.1/56.9 | |
| 9-20 | No | 0/0/0 | 0.78/0.79/0.80 | Excellent |

### Example 6 (mineral water).

**Table 6a: Example 6 - Mineral water.**

| Inside coating | Adhesion layer | Barrier layer | Top layer |
|---|---|---|---|
| 6a | 70% PETG/30% PET | 35 % PBT, 65% PET | 100% PET |
| 6b | 70% PETG/30% PET | 60 % PBT, 40 % PET | 100% PET |
| Ref. | 70% PETG/30% PET | 100% PET | 100% PET |

The reference (Ref.) is coated according to the state of the art, 6a and 6b are coated according to the invention. The thickness of the layers was 4 µm:22 µm:4 µm.

Cans were filled with mineral water and stored at 35 °C. Furthermore, part of the cans were evaluated with forced dome growth. This forced dome growth was achieved by submerging the cans in warm water (55°C), resulting in growth of the dome. This is known to result in crazing in the bottom channel and thus in increased iron uptake. In the table below, the results of the amount of iron uptake after 3 months is given.

**Table 6b: Example 6a. 6b and Ref- Fe-uptake.**

| Results after 3 months | No dome growth | Dome growth |
|---|---|---|
| Fe uptake (mg/l) | | |
| 6a | 0.01 | 0.09 |
| 6b | 0.01 | 0.05 |
| Ref. | 0.17 | 6.90 |

The results clearly show that the reference can shows an increased level of iron uptake after 3 months, whereas both the modified coatings do not show this effect. The effect is particularly strong if dome growth occurs.

The results clearly indicate that adding an amount of 35% PBT to the barrier layer of the coating system gives improved results as to the corrosion behaviour whilst maintaining excellent can making performance.

The results of examples 1-6 are summarized in table 7.

**Table 7: Summary of examples 1-6 (1, 4, 6a, 6b are embodiments of the invention).**

| Ex. | Inner layer | Barrier layer | Outer layer | Corrosion resistance | Can-making performance | Content |
|---|---|---|---|---|---|---|
| 1 | 6µ 70% PETG /30% PET | 18µ 50% PBT /50% PET | 6µ 100% PET | ++ | ++ | water |
| 2 | 6µ 70% PETG /30% PET | 24µ 50% PBT /50% PET | None | ++ | -- | water |
| 3 | 6µ 70% PETG /30% PET | 24µ 100% PET | None | -- | ++ | water |
| 4 | 6µ 70% PETG /30% PET | 18µ 50% PBT /50% PET | 6µ 100% PET | + | ++ | soft drink |
| 5 | 6µ 70% PETG /30% PET | 24µ 100% PET | None | -- | ++ | soft drink |
| 6a | 4µ 70% PETG /30% PET | 22µ 35% PBT /65% PET | 4µ 100% PET | ++ | ++ | water |
| 6b | 4µ 70% PETG /30% PET | 22µ 60% PBT /40% PET | 4µ 100% PET | ++ | ++ | water |
| Ref | 4µ 70% PETG /30% PET | 22µ 100% PET | 4µ 100% PET | -- | ++ | water |

It should be noted that when the barrier layer and the top layer are the same material, such as in Table 7, example 3, 5 and Ref., the same resulting coating system can be obtained by applying one layer of 24 µm (as in example 3) or by applying a barrier layer of 18 µm and a top layer of 6 µm. It is partly dependent on the nature of the coating line where the sheet material is produced which option, i.e. one layer of e.g. 24 µm or 2 layers of 18 and 6 µm respectively, is the most adequate option.

The invention will now be further described with reference to the accompanying drawings in which:
Fig. 1 shows coating system according to the invention on a substrate;
Fig. 2 shows a schematic representation of a beverage can and two enlarged sections.

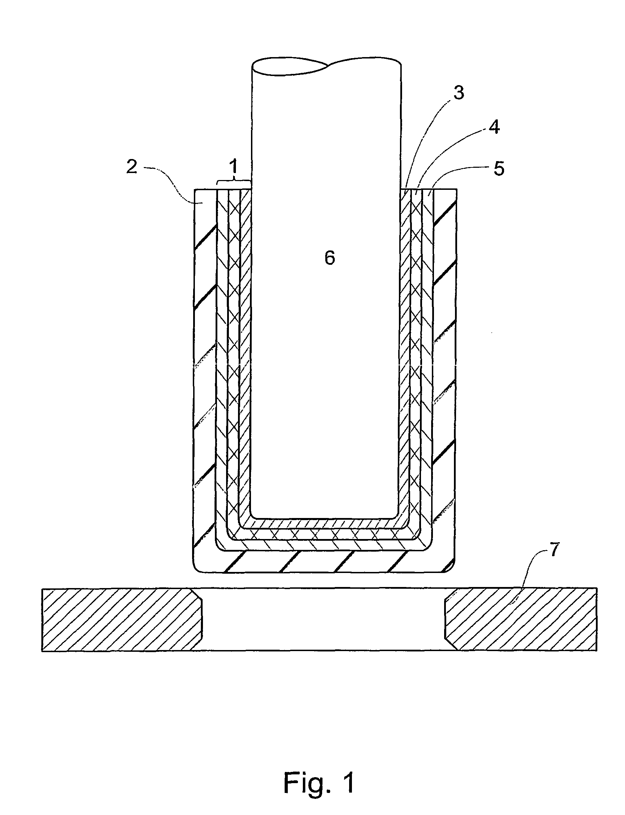

Figure 1 shows a coating system 1 on a substrate in the form of a can body 2 comprising an inner layer 3 which provides sufficient adhesion to the substrate, a barrier layer 4 which acts as a barrier layer and provides excellent resistance to stress-cracking, and an outer layer 5 which provides non tacking properties to the draw and wall ironing tool 6. Also shown is a drawing ring 7. The substrate may also be provided with a coating layer on the outside of the body, but this is not shown in the figure.

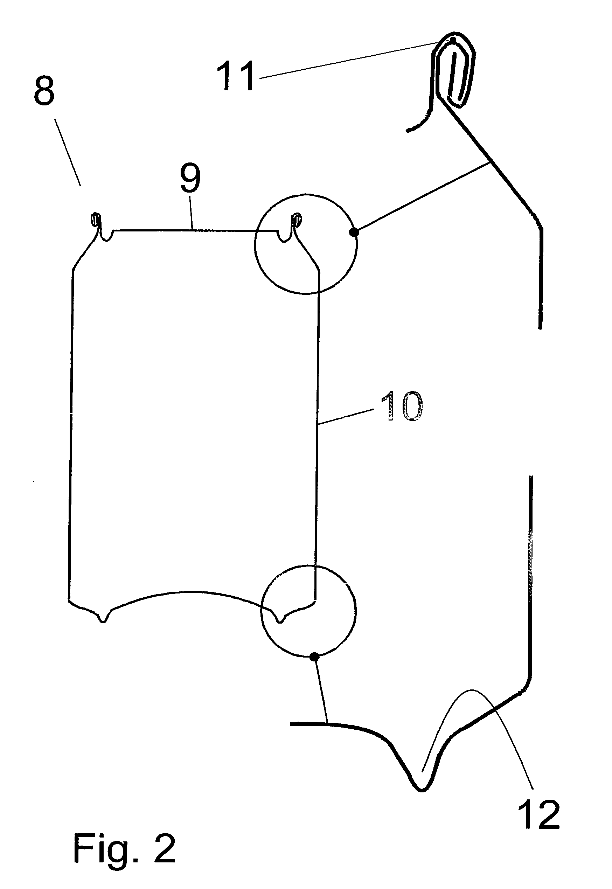

Figure 2 shows a schematic representation of a beverage can 8. Enlarged section A shows the location of the seam between the lid 9 and the body 10 of the beverage can. The body hook radius is indicated by 11 and the bottom channel is indicated with 12.

It is of course to be understood that the present invention is not limited to the described embodiments and examples described above, but encompasses any and all embodiments within the scope of the description and the following claims.

## Claims

1. A sheet material to be made into an object by an industrial forming process, the material comprising a metal substrate and a polymer coating system bonded thereto, the coating system comprising
- an inner layer comprising a blend and/or copolymer of PET and CHDM and/or IPA modified PET as a layer for bonding the system to the substrate;
- a layer consisting of a blend and/or a copolymer of PET and PBT as a barrier layer;
- an outer layer consisting of PET;
wherein the outer layer has non-tacking properties so as to avoid sticking of the material to the forming tools at normal operation temperatures in the industrial forming process.

2. Sheet material according to claim 1 wherein the PBT-content in the barrier layer is preferably at least about 10%, more preferably at least about 15% and more preferably at least about 20%.

3. Sheet material according to claim 1 or 2 wherein the PBT-content in the barrier layer is at most about 60%.

4. Sheet material according to any one of the claims 1 to 3 wherein the barrier layer consists of approximately 50% PET and approximately 50% PBT.

5. Sheet material according to any one of the claims 1 to 4 wherein the PBT-content in the barrier layer is between about 25 % and about 35%

6. Sheet material according to any one of the claims 1 to 5 wherein the outer layer has a glass transition temperature of at least 70 °C so as to avoid tacking.

7. Sheet material according to any one of the claims 1 to 6 wherein the outer layer has a melting temperature of at least 240 °C so as to avoid tacking.

8. Sheet material according to any one of the one of the claims 1 to 7wherein the thickness of the barrier layer is at least 10 µm, preferably at least 15 µm.

9. Sheet material according to any one of the one of the claims 1 to 8 wherein the total thickness of the coating system is smaller than 40 µm, preferably between 20 and 35 µm, more preferably about 30 µm.

10. Metal container made from a sheet material according to any one of the claims 1 to 10.

11. Metal container according to claim 10 wherein the substrate substantially comprises steel or a steel alloy or aluminium or an aluminium alloy.

12. Metal container according to claim 10 or 11 wherein the substrate is electro-chromium coated steel (ECCS) or tinplate.

13. Metal container according to any of the claims 10 to 12 wherein the metal container is a beverage can.

14. Process for producing a sheet material comprising a metal substrate and a polymer coating system bonded thereto, the coating system comprising
- an inner layer comprising a blend and/or copolymer of PET and CHDM and/or IPA modified PET a layer for bonding the system to the substrate;
- a layer comprising consisting of a blend and/or a copolymer of PET and PBT as a barrier layer;
- an outer layer consisting of PET;
wherein the outer layer has non-tacking properties so as to avoid sticking of the material to the forming tools at normal operation temperatures in the industrial forming process wherein the coating system is produced in situ by extrusion of a layer or co-extrusion of at least two layers using a suitable feed-block/die set-up.

15. Process according to claims 14 **characterised in that** the coating system is formed by first preparing a film comprising one or more layers of the coating system, optionally stretching the film, and applying it to the substrate.

16. Process for producing a sheet material according to claim 15 wherein the film comprising the barrier and outer layer, which is optionally stretched the film before applying it to the substrate, is applied to the substrate which is already provided with the inner layer.

## Patentansprüche

1. Bahnmaterial zum Formen in einen Gegenstand durch ein industrielles Formverfahren, wobei das Material ein Metallsubstrat und ein Polymerbeschichtungssystem aufweist, das daran gebondet bzw. damit verbunden ist, wobei das Beschichtungssystem umfaßt:
- eine Innenschicht, umfassend eine Mischung und/oder ein Copolymer aus PET und CHDM und/oder IPA modifiziertem PET als eine Schicht zum Bonden des Systems an das Substrat;
- eine Schicht, bestehend aus einer Mischung und/oder einem Copolymer aus PET und PBT als eine Barriereschicht;
- eine Außenschicht, bestehend aus PET;
wobei die Außenschicht nicht klebende Eigenschaften aufweist, um ein Kleben des Materials an den Formwerkzeugen bei normaler Betriebstemperatur in dem industriellen Formverfahren zu vermeiden.

2. Bahnmaterial nach Anspruch 1, wobei der PBT-Gehalt in der Barriereschicht vorzugsweise wenigstens etwa 10 %, noch bevorzugter wenigstens etwa 15 % und noch bevorzugter wenigstens etwa 20 % beträgt.

3. Bahnmaterial nach Anspruch 1 oder 2, wobei der PBT-Gehalt der Barriereschicht höchstens etwa 60 % beträgt.

4. Bahnmaterial nach einem der Ansprüche 1 bis 3, wobei die Barriereschicht aus etwa 50 % PET und etwa 50 % PBT besteht.

5. Bahnmaterial nach einem der Ansprüche 1 bis 3, wobei der PBT-Gehalt in der Barriereschicht zwischen etwa 25 % und etwa 35 % ist.

6. Bahnmaterial nach einem der Ansprüche 1 bis 5, wobei die Außenschicht eine Glasübergangstemperatur.von wenigstens 70 °C aufweist, um ein Kleben zu vermeiden.

7. Bahnmaterial nach einem der Ansprüche 1 bis 6, wobei die Außenschicht eine Schmelztemperatur von wenigstens 240 °C aufweist, um ein Kleben zu vermeiden.

8. Bahnmaterial nach einem der Ansprüche 1 bis 7, wobei die Dicke der Barriereschicht wenigstens 10 µm, vorzugsweise wenigstens 15 µm beträgt.

9. Bahnmaterial nach einem der Ansprüche 1 bis 8, wobei die gesamte Dicke des Beschichtungssystems kleiner als 40 µm, vorzugsweise zwischen 20 und 35 µm, noch bevorzugter etwa 30 µm ist.

10. Metallbehälter, hergestellt aus einem Bahnmaterial nach einem der Ansprüche 1 bis 9.

11. Metallbehälter nach Anspruch 10, wobei das Substrat im wesentlichen Stahl oder eine Stahllegierung oder Aluminium oder eine Aluminiumlegierung umfaßt.

12. Metallbehälter nach Anspruch 10 oder 11, wobei das Substrat elektrochrombeschichteter Stahl (ECCS) oder Weißblech ist.

13. Metallbehälter nach einem der Ansprüche 10 bis 12, wobei der Metallbehälter eine Getränkedose ist.

14. Verfahren zum Herstellen eines Bahnmaterials, umfassend ein Metallsubstrat und ein Polymerbeschichtungssystem, das daran gebunden ist, wobei das Beschichtungssystem umfaßt:
- eine Innenschicht, umfassend eine Mischung und/oder ein Copolymer aus PET und CHDM und/oder IPA modifiziertes PET als eine Schicht zum Verbinden des Systems mit dem Substrat;
- eine Schicht, umfassend bzw. bestehend aus eine(r) Mischung und/oder ein(em) Copolymer aus PET und PBT als einer Barriereschicht;
- eine Außenschicht, bestehend aus PET;
wobei die Außenschicht nicht klebrige Eigenschaften aufweist, um ein Kleben des Materials an den Formwerkzeugen bei normalen Betriebstemperaturen in dem industriellen Formverfahren zu vermeiden, wobei das Beschichtungssystem in situ durch Extrusion einer Schicht oder Co-Extrusion von wenigstens zwei Schichten unter Verwendung eines geeigneten Zufuhr-Block/Stempelaufbaus gebildet wird.

15. Verfahren nach Anspruch 14, **dadurch gekennzeichnet, daß** das Beschichtungssystem zuerst durch ein Herstellen einer Folie bzw. eines Films, umfassend eine oder mehrere Schicht(en) des Beschichtungssystems, gegebenenfalls durch ein Strecken der Folie und Aufbringen derselben auf das Substrat gebildet wird.

16. Verfahren zum Herstellen eines Bahnmaterials nach Anspruch 15, wobei die Folie bzw. der Film, umfassend die Barriere- und Außenschicht, welche gegebenenfalls die gestreckte Folie ist, bevor sie auf das Substrat aufgebracht wird, auf das Substrat aufgebracht wird, welches bereits mit der Innenschicht versehen ist.

## Revendications

1. Matériau en feuille, destiné à être façonné en un objet par un procédé industriel de formage, lequel matériau comporte un substrat métallique et un système de revêtement en polymère qui y est attaché, lequel système de revêtement comporte :
- une couche interne comprenant un mélange et/ou copolymère de PET (poly(éthylène téréphtalate)) et PET modifié par CHDM (cyclohexane-diméthanol) et/ou IPA (alcool isopropylique), en tant que couche servant à attacher le système au substrat,
- une couche constituée d'un mélange et/ou copolymère de PET et PBT (poly(butylène téréphtalate)), en tant que couche servant de barrière,
- et une couche externe constituée de PET,
laquelle couche externe est anti-adhérente, ce qui permet d'éviter que le matériau adhère aux outils de formage aux températures auxquelles on opère normalement dans le cadre d'un procédé industriel de formage.

2. Matériau en feuille, conforme à la revendication 1, dans lequel la proportion de PBT dans la couche barrière vaut de préférence au moins environ 10 %, mieux encore au moins environ 15 %, et surtout au moins environ 20 %.

3. Matériau en feuille, conforme à la revendication 1 ou 2, dans lequel la proportion de PBT dans la couche barrière vaut au plus environ 60 %.

4. Matériau en feuille, conforme à l'une des revendications 1 à 3, dans lequel la couche barrière est constituée d'à peu près 50 % de PET et d'à peu près 50 % de PBT.

5. Matériau en feuille, conforme à l'une des revendications 1 à 3, dans lequel la proportion de PBT dans la couche barrière vaut d'environ 25 % à environ 35 %.

6. Matériau en feuille, conforme à l'une des revendications 1 à 5, dans lequel la couche externe présente une température de transition vitreuse d'au moins 70 °C, ce qui permet d'éviter tout phénomène d'adhérence.

7. Matériau en feuille, conforme à l'une des revendications 1 à 6, dans lequel la couche externe présente une température de fusion d'au moins 240 °C, ce qui permet d'éviter tout phénomène d'adhérence.

8. Matériau en feuille, conforme à l'une des revendications 1 à 7, dans lequel l'épaisseur de la couche barrière vaut au moins 10 µm, et de préférence au moins 15 µm.

9. Matériau en feuille, conforme à l'une des revendications 1 à 8, dans lequel l'épaisseur totale du système de revêtement vaut moins de 40 µm, de préférence de 20 à 35 µm, et mieux encore environ 30 µm.

10. Récipient métallique fait d'un matériau en feuille conforme à l'une des revendications 1 à 9.

11. Récipient métallique conforme à la revendication 10, dans lequel le substrat comprend largement de l'acier ou un alliage à base d'acier, ou de l'aluminium ou un alliage à base d'aluminium.

12. Récipient métallique conforme à la revendication 10 ou 11, dans lequel le substrat est en acier électro-chromé (AEC) ou en fer-blanc.

13. Récipient métallique conforme à l'une des revendications 10 à 12, lequel récipient métallique est une boîte à boisson.

14. Procédé de production d'un matériau en feuille comportant un substrat métallique et un système de revêtement en polymère qui y est attaché, lequel système de revêtement comporte :
- une couche interne comprenant un mélange et/ou copolymère de PET (poly(éthylène téréphtalate)) et PET modifié par CHDM (cyclohexane-diméthanol) et/ou IPA (alcool isopropylique), en tant que couche servant à attacher le système au substrat,
- une couche constituée d'un mélange et/ou copolymère de PET et PBT (poly(butylène téréphtalate)), en tant que couche servant de barrière,
- et une couche externe constituée de PET,
laquelle couche externe est anti-adhérente, ce qui permet d'éviter que le matériau adhère aux outils de formage aux températures auxquelles on opère normalement dans le cadre d'un procédé industriel de formage, et dans lequel procédé le système de revêtement est produit in situ, par extrusion d'une couche ou co-extrusion d'au moins deux couches, à l'aide d'un ensemble bloc d'alimentation et filière approprié.

15. Procédé conforme à la revendication 14, **caractérisé en ce qu'**on forme le système de revêtement en préparant d'abord un film comprenant une ou plusieurs couches du système de revêtement, en étirant éventuellement ce film, et en l'appliquant sur le substrat.

16. Procédé de production d'un matériau en feuille, conforme à la revendication 15, dans lequel on applique sur le substrat, déjà revêtu de la couche interne, un film comprenant la couche barrière et la couche externe, lequel film est éventuellement étiré avant d'être appliqué sur le substrat.
